# FASCICULE DE BREVET EUROPEEN

(11) **EP 1 575 240 B1**
(45) Date de publication et mention de la délivrance du brevet: **16.04.2008**
(21) Numéro de dépôt: 05290491.9
(22) Date de dépôt: 04.03.2005
(51) Int. Cl.: H04L 29/06, H04L 12/46

(54) **Dispositif et procédé de traitement de trames à champ à utilisation multiprotocolaire, pour un réseau de communications**
Vorrichtung und Verfahren zur Bearbeitung von Rahmen mit multiprotokollverwendungsfeldern für ein Kommunikationsnetzwerk
Device and method for a treatment of frames with multiprotocol usage field for a communication network

(30) Priorité: 09.03.2004 FR 0450472
(43) Date de publication de la demande: 14.09.2005
(60) Demande divisionnaire: 07102262.8
(73) Titulaire: Alcatel Lucent, 75008 Paris (FR)
(72) Inventeur: Ciavaglia, Laurent, 77300 Fontainebleau (FR); Dotaro, Emmanuel, 91370 Verrières le Buisson (FR)
(74) Mandataire: Korakis-Ménager, Sophie

(56) Documents cités:
- US-A1- 2002 167 898
- J. REYNOLDS ET AL.: "RFC 1700: Assigned Numbers" IETF RFC PUBLICATION, PAGES 1, 16, 54, 168-171, 176-178, [Online] octobre 1994 (1994-10), XP002302087 INTERNET Extrait de l'Internet: URL:ftp://ftp.isi.edu/in-notes/rfc1700.txt > [extrait le 2004-10-20]
- E. ROSEN ET AL.: "RFC 3031: Multiprotocol Label Switching Architecture (MPLS)" RFC-PUBLICATION, [Online] janvier 2001 (2001-01), pages 1-11, XP002302088 INTERNET Extrait de l'Internet: URL:ftp://ftp.isi.edu/in-notes/rfc3031.txt > [extrait le 2004-10-20]

## Description

L'invention concerne le domaine des réseaux de communications, et plus précisément le traitement de trames de données au sein de tels réseaux.

Comme le sait l'homme de l'art, un certain nombre de techniques permettent à des réseaux, utilisant des protocoles de communication différents, d'échanger des données incluses dans des trames et d'assurer des services. Parmi ces techniques, on peut notamment citer l'encapsulation, qui permet à des réseaux différents de communiquer entre eux, et la conversion (ou mise en correspondance) qui permet à des réseaux de mettre en oeuvre des services offerts par d'autres réseaux.

Le concept de réseau local virtuel 2 VLAN est décrit dans IEEE Std. 802.1Q-2003, Virtual Bridged Local Area Networks, ISBN 0-7381-3662-X.

Afin de permettre l'ajout de nouvelles caractéristique ou fonctionnalités protocolaires, les techniques utilisées ont tendance à additionner ou empiler les champs de trame spécifiques à chaque protocole les uns au dessus des autres. Cela requiert en outre certaines modifications de la mise en oeuvre standard des protocoles. Or, ces techniques ont pour conséquence de dupliquer les informations de contrôle dans chaque unité de données de protocole (ou PDU pour « Protocol Data Unit »), ce qui provoque un surdébit substantiel, génère des obstacles à l"'interfonctionnement" (ou "interopérabilité") des équipements de réseau et/ou à l'interconnectivité des réseaux et accroît la complexité de gestion des trames.

Ce problème apparaît dans la technique Ethernet-Over-MPLS décrite dans l'Internet draft « Encapsulation methods for Transport of Layer 2 Frames Over iP and MPLS Networks », Martini et al., Avril 2003.

Le RFC 1700 décrit le concept de réserver un champ spécifique dans une trame pour indiquer le type de message. MPLS est décrit dans le RFC 3031.

L'invention a donc pour but d'améliorer la situation.

Elle propose à cet effet un dispositif de traitement de trames de données selon la revendication 1.

Préférentiellement, les moyens de traitement sont chargés d'ordonner l'application à la trame reçue du traitement protocolaire spécifique qui correspond à l'ensemble déterminé.

Lorsque les moyens de traitement peuvent accéder à une première table de correspondance entre des identifiants d'ensembles de valeurs et des traitements protocolaires, ils peuvent être agencés de manière à déterminer un traitement protocolaire correspondant à un ensemble de valeurs déterminé par les moyens de détection. De même, lorsque les moyens de traitement peuvent accéder à une seconde table de correspondance entre des traitements protocolaires et des valeurs protocolaires dédiées, ils peuvent être agencés de manière à ordonner le remplacement dans la trame reçue de la valeur de son champ de trame choisi par une valeur protocolaire dédiée au traitement spécifique déterminé.

Par ailleurs, le dispositif peut comprendre une première mémoire, accessible à ses moyens de détection et stockant les différents ensembles de valeurs. Il peut également comprendre une seconde mémoire, accessible à ses moyens de traitement et stockant la première et/ou la seconde table(s) de correspondance.

En outre, les moyens de détection peuvent être chargés de modifier les valeurs qui définissent l'un au moins des ensembles en fonction d'instructions reçues, provenant, par exemple, d'un plan de contrôle du réseau, dont les moyens de traitement constituent éventuellement l'une au moins des parties.

Le protocole du réseau peut être, par exemple, un protocole dit « de niveau 2 ». Dans ce cas, il peut s'agir d'un protocole Ethernet et son champ de trame choisi peut être le champ dit « Ethernet VLAN Tag ».

De façon particulièrement avantageuse, l'un au moins des ensembles de valeurs peut être dédié à un traitement propre à un autre protocole ou service, différent de celui supporté par le réseau, comme par exemple GMPLS, L2-LSP et leurs évolutions et variantes. Par exemple, les moyens de traitement peuvent être agencés de manière à ordonner le remplacement de la valeur du champ Ethernet VLAN Tag par la valeur du champ dit « GMPLS label ».

L'invention propose également un équipement de réseau équipé d'une partie au moins d'un dispositif de traitement du type de celui présenté ci-avant.

L'invention propose en outre un procédé de gestion de trames de données selon la revendication 16.

D'autres caractéristiques et avantages de l'invention apparaîtront à l'examen de la description détaillée ci-après, et des dessins annexés, sur lesquels :
- la figure 1 illustre de façon schématique un routeur équipé d'un exemple de réalisation d'un dispositif de traitement de trames selon l'invention, de type distribué,
- la figure 2 illustre de façon schématique un exemple de trame de données à double encapsulation, de type classique, et
- la figure 3 illustre de façon schématique un exemple de trame de données selon l'invention.

Les dessins annexés pourront non seulement servir à compléter l'invention, mais aussi contribuer à sa définition, le cas échéant.

L'invention a pour objet de permettre l'utilisation d'un champ de protocole pour coder une information ou une fonctionnalité, éventuellement nouvelle, nécessaire au support par un réseau d'un protocole ou d'un service, éventuellement nouveau.

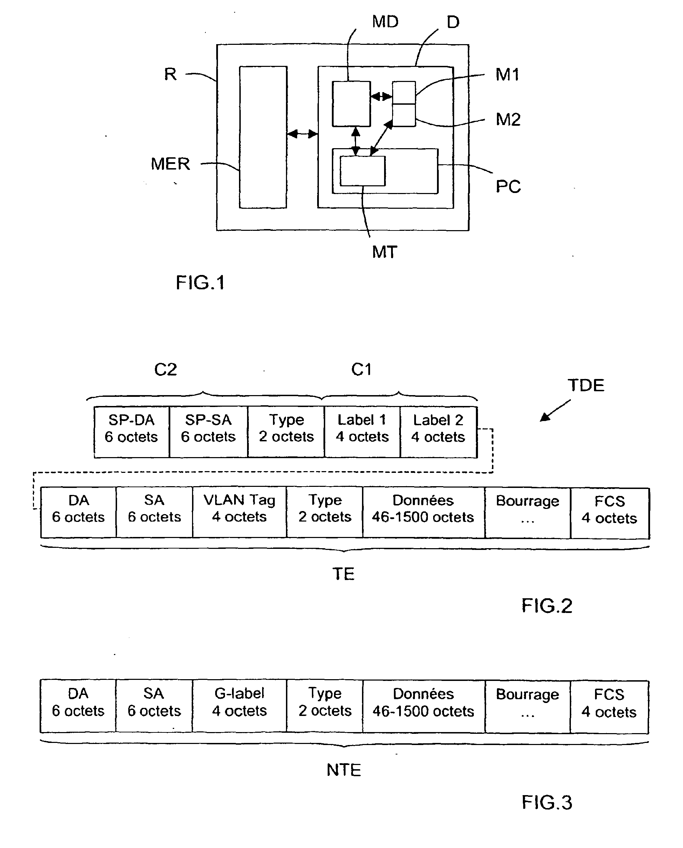

L'invention propose à cet effet d'équiper chaque réseau de communications d'au moins un dispositif de traitement de trames de données D, par exemple du type de celui illustré sur la figure 1.

L'invention concerne tout réseau de communications au sein duquel les données sont transmises dans des champs de trame, et notamment les réseaux supportant un protocole dit à technologie de niveau 2, comme par exemple les réseaux Ethernet, ATM, FR, et X25, ainsi que le protocole GFP (pour « Generic Framing Procedure », aka G.7041) qui n'est pas un protocole à technologie de niveau 2 (ou « de couche 2 ») mais un protocole de tramage/encapsulation (ou « framing »).

Par ailleurs, l'invention peut être mise en oeuvre soit sous une forme centralisée, soit sous une forme distribuée. Dans un cas comme dans l'autre, les dispositifs D selon l'invention doivent être raccordés aux, ou implantés au moins partiellement dans, les équipements (ou noeuds) de réseau R chargés de router ou commuter les trames de données au sein du réseau, comme par exemple les routeurs ou les commutateurs.

On considère dans ce qui suit, à titre d'exemple illustratif, qu'un premier réseau Ethernet est raccordé à un second réseau à protocole Internet (ou IP).

Considérée au sein du premier réseau (ici Ethernet), l'invention consiste tout d'abord à identifier (ou choisir) parmi les champs qui constituent les trames de données au format du protocole Ethernet, et plus précisément l'un des champs de contrôle du protocole qui constituent ce que l'homme de l'art appelle les unités de données de protocole (ou PDU pour « Protocol Data Unit »), celui qui sert à assurer un traitement protocolaire particulier pour ledit protocole Ethernet.

Par exemple on identifie le champ dit « Ethernet VLAN Tag », chargé de définir des sous-réseaux virtuels au sein d'un même domaine Ethernet en distinguant les différents sous-réseaux par un identifiant appelé « VLAN Tag ».

Puis, on associe à ce champ de trame choisi au moins deux ensembles de valeurs (ou intervalles de valeurs dans le cas le plus simple) correspondant respectivement à son traitement protocolaire natif (ou un nouveau traitement protocolaire de substitution), pour le protocole Ethernet, et à un traitement protocolaire différent, pour un autre protocole ou service que l'on souhaite voir supporté ou mis en oeuvre par le premier réseau Ethernet.

Cet autre protocole ou service peut être, par exemple, GMPLS (pour « Generalized Multi Protocol Label Switching ») ou L2-LSP (pour « Layer 2 - Label Switched Path »). Il est rappelé qu'un service L2-LSP est un circuit (ou une connexion) virtuel(le) reposant sur un plan de contrôle GMPLS et requérant une infrastructure de réseau à technologie (quasi) de niveau 2.

Par exemple, le premier ensemble de valeur correspond aux différentes valeurs que peut prendre le champ Ethernet VLAN Tag, tandis que le second ensemble de valeur correspond aux différentes valeurs que peut prendre le champ GMPLS label selon le protocole GMPLS.

Une fois les ensembles définis, on les stocke dans une mémoire M1 du dispositif D. Il peut bien sûr s'agir d'une mémoire spécifique ou d'un espace mémoire réservé à cet effet et contenu dans une mémoire partagée entre plusieurs fonctions.

Ce dernier comporte à cet effet, tout d'abord, des moyens de détection implantés, de préférence sous la forme de modules MD, dans chaque noeud R du premier réseau Ethernet. Chaque module de détection MD est chargé d'observer chaque trame qui parvient au niveau du module d'émission / réception MER du noeud R dans lequel il est implanté, afin de déterminer la valeur de son champ de trame choisi (ici Ethernet VLAN Tag). Une fois la valeur déterminée, le module de détection MD accède à la mémoire M1 pour déterminer l'ensemble de valeurs auquel il appartient.

Le dispositif D comporte par ailleurs des moyens de traitement qui peuvent être soit centralisés dans un équipement de gestion du réseau, soit distribués sous la forme de modules de traitement MT dans chaque noeud R comportant un module de détection MD, comme illustré sur la figure 1.

En d'autres termes, le premier réseau Ethernet peut comporter soit un dispositif D distribué dans chaque noeud R, pour ce qui concerne ses modules de détection MD, et dans un équipement de gestion pour ce qui concerne son module de traitement MT, soit une multiplicité de dispositifs D comportant à la fois un module de détection MD et un module de traitement MT et implantés chacun dans un noeud R de manière à traiter localement les trames reçues, comme c'est le cas dans l'exemple illustré sur la figure 1.

Lorsque chaque noeud R est équipé d'un dispositif D complet, le module de traitement MT est chargé de déterminer le traitement protocolaire spécifique qui correspond à l'ensemble qui a été déterminé par le module de détection MD associé, et qui doit être appliqué à la trame reçue. Pour ce faire, le dispositif D comprend préférentiellement une mémoire (ou espace mémoire réservé) M2, couplée au module de traitement MT, et dans laquelle est stockée une première table de correspondance entre les identifiants des ensembles de valeurs (stockées dans la mémoire M1) et les traitements protocolaires associés.

Certains de ces traitements peuvent correspondre, éventuellement au sein d'une autre table, à des valeurs protocolaires dédiées destinées à remplacer une valeur de champ de trame choisi, contenu dans une trame reçue. Par exemple, un traitement protocolaire, correspondant à un ensemble de valeurs, peut consister à déterminer dans une table de labels du noeud R, à l'aide du module de traitement MT, l'identifiant de LSP qui identifie la connexion LSP avec le noeud suivant sur le chemin de la trame reçue.

Il est avantageux que chaque dispositif D dispose de sa propre table de labels, étant donné que les labels ont fréquemment une signification locale et/ou temporaire associée à deux noeuds du réseau. De la sorte, un même ensemble de valeurs peut correspondre au sein de deux noeuds distants à un même traitement protocolaire, mais à des valeurs protocolaires (identifiants LSP) différentes.

Lorsque le réseau ne comprend qu'un unique module de traitement MT centralisé, ce dernier est chargé de déterminer le traitement protocolaire spécifique, qui correspond à l'ensemble qui a été déterminé par l'un des modules de détection MD implanté dans l'un des routeurs R qu'il supervise, et qui doit être appliqué à la trame que ce routeur R a reçue. La détermination du traitement protocolaire est identique à celle décrite ci-avant, si ce n'est que la mémoire M2 contenant la table de correspondance identifiants d'ensemble/traitements protocolaires est préférentiellement stockée dans le serveur de gestion dans lequel est implanté le module de traitement MT. Il est plus commode que le serveur de gestion dispose de la mémoire M2, mais cela n'est pas obligatoire. Le module de traitement MT centralisé peut en effet récupérer les valeurs stockées dans la mémoire M2 en même temps que les informations sur la trame reçue à traiter.

Chaque module de détection MD est préférentiellement agencé de manière à remplacer, dans la mémoire M1 qui lui est associée, les valeurs qui définissent l'un au moins des ensembles dont il assure la détection. Il peut également être agencé de manière à ajouter dans la mémoire M1 qui lui est associée, un nouvel ensemble de valeurs. Ce remplacement ou cet ajout est effectué en fonction d'instructions reçues préférentiellement du plan de contrôle du réseau PC, lequel est soit centralisé, par exemple dans un serveur de gestion, soit distribué dans chaque noeud R, comme illustré sur la figure 1.

Il est important de noter qu'un plan de contrôle PC distribué peut faire partie intégrante d'un dispositif D, comme illustré, ou qu'en variante un module de traitement MT distribué peut constituer tout ou partie d'un plan de contrôle PC distribué.

Par ailleurs, chaque module de traitement MT est préférentiellement agencé de manière à remplacer, dans la mémoire M2 qui lui est associée, le traitement protocolaire qui est associé à l'un au moins de ses ensembles. Il peut également être agencé de manière à ajouter dans la mémoire M2 qui lui est associée, un traitement protocolaire qui est associé à un nouvel ensemble. Ce remplacement ou cet ajout est effectué en fonction d'instructions reçues préférentiellement du plan de contrôle du réseau PC, présenté ci-avant.

La mise à jour des contenus des mémoires M1 et M2 peut se faire dynamiquement, et de façon périodique ou bien chaque fois qu'une modification est décidée par l'opérateur du réseau.

Grâce à l'invention, on peut désormais changer la sémantique d'une partie choisie de la PDU d'une trame en fonction de sa valeur. Ainsi, un noeud R peut gérer plusieurs protocoles et/ou services différents sur une même interface, à un même instant (paquet après paquet), et avec un unique protocole hôte. L'infrastructure d'un réseau, par exemple Ethernet, n'a donc pas besoin d'être modifiée pour permettre audit réseau de supporter un ou plusieurs autres protocoles et/ou nouveaux services que celui ou ceux pour lequel il a été initialement conçu, exception faite des moyens de traitement qui doivent être adaptés aux nouveaux traitements protocolaires envisagés (comme par exemple être capables de gérer les labels GMPLS (ou G-labels)). En particulier, le protocole hôte du réseau n'a pas besoin d'être modifié ou adapté, puisque seul le traitement protocolaire de l'un au moins des champs de contrôle est changé conformément à la configuration du plan de contrôle PC qui est transparente aux fonctions de bas niveau.

On se réfère maintenant aux figures 2 et 3 pour comparer, à l'aide d'un exemple, la différence entre une trame de données de l'art antérieur et une trame de données selon l'invention.

On a représenté sur la figure 2 un exemple de trames de données TDE de l'art antérieur permettant le transport de données dans un réseau Ethernet, dans le cas d'une double encapsulation de type IP/MPLS. Plus précisément, la trame Ethernet TE, contenant les données à transporter, est encapsulée à l'aide d'une première « capsule » C1 constituée de deux champs de contrôle MPLS (Label 1 et Label 2, chacun constitués de quatre octets), elle-même encapsulée à l'aide d'une seconde « capsule » C2 constituée de trois champs d'entête de la trame Ethernet pour le transport (SP-DA (adresse destination), SP-SA (adresse source) et Type, constitués respectivement de six octets, six octets et deux octets).

La trame Ethernet TE encapsulée comprend classiquement un champ DA de six octets, un champ SA de six octets, un champ VLAN Tag de quatre octets, un champ type de deux octets, un champ de données comportant entre quarante six et mille cinq cents octets, un champ de bourrage (ou « padding ») dont le nombre d'octets varie selon le nombre d'octets du champ de données, et un champ FCS de quatre octets.

Dans un réseau selon l'invention, la double encapsulation de la trame Ethernet TE n'a plus lieu d'être, puisque l'on peut utiliser le champ VLAN Tag pour véhiculer les informations de contrôle d'un champ de type GMPLS label, par exemple. Par conséquent, la trame de données TDE de la figure 2 se présente désormais sous la forme illustrée sur la figure 3, c'est-à-dire sous la forme d'une nouvelle trame Ethernet NTE dans laquelle le champ VLAN Tag sert à la fois à sa fonction native, qui correspond à un premier ensemble de valeurs, et à un Label GMPLS (ou L2-LSP), qui correspond à un second ensemble de valeurs.

Ainsi, lorsqu'un noeud R du réseau Ethernet reçoit une trame NTE, son (ou le) dispositif D analyse le contenu du champ VLAN Tag afin de déterminer s'il désigne sa fonction native ou bien un traitement protocolaire de label GMPLS. Puis, une fois la détermination effectuée le noeud R peut appliquer à la trame NTE reçue le traitement protocolaire approprié.

Le dispositif de traitement D selon l'invention, et notamment son module de traitement MT et son (ou ses) module(s) de détection MD, peuvent être réalisés sous la forme de circuits électroniques, de modules logiciels (ou informatiques), ou d'une combinaison de circuits et de logiciels.

Comme mentionné précédemment, l'invention ne nécessite aucune addition ou modification aux standards protocolaires existants, exception faite des extensions GMPLS nécessaires au support des L2-LSPs (lesquelles ne génèrent pas de complexité en terme de gestion).

En outre, l'invention permet une réduction importante du nombre de champs de contrôle d'encapsulation puisqu'elle permet de supprimer la duplication d'informations de contrôle.

De plus, l'invention permet de conserver en l'état l'infrastructure, la technologie et le protocole d'un réseau, sans modification des standards.

Par ailleurs, l'invention permet un fonctionnement au minimum dual qui autorise l'introduction progressive de nouveaux protocoles et/ou services tant au niveau des noeuds (carte après carte) qu'au niveau du réseau (noeud après noeud).

L'invention permet également de bénéficier au sein d'un réseau Ethernet des caractéristiques du protocole GMPLS, et notamment en termes de routage, de signalisation, de protection et d'ingénierie de trafic.

Enfin, l'invention peut être facilement mise en oeuvre par une intégration au moins partielle dans les unités de traitement des réseaux (ou NPU pour « Network Process Unit ») ou dans les processeurs, étant donné que seul le traitement de certains champs de contrôle choisis est modifié (sémantique, format interne) et non le format externe des unités de données de protocole (PDUs).

L'invention ne se limite pas aux modes de réalisation de dispositif de traitement, d'équipement de réseau (ou noeud) et de procédé de traitement décrits ci-avant, seulement à titre d'exemple, mais elle englobe toutes les variantes que pourra envisager l'homme de l'art dans le cadre des revendications ci-après.

## Revendications

1. Dispositif de traitement de trames de données (D) pour un réseau de communications supportant au moins un protocole de communication Ethernet utilisant un format de trame de données comportant un champ d'identifiant de réseau local virtuel VLAN, **caractérisé en ce qu**'il comprend des moyens de détection (MD) agencés pour déterminer, à réception d'une trame de données, parmi des ensembles de valeurs prédéfinies correspondant respectivement à des traitements protocolaires différents, l'ensemble auquel appartient une valeur prise par au moins ledit champ d'identifiant de VLAN contenu dans ladite trame reçue, et des moyens de traitement (MT) agencés pour déterminer un traitement protocolaire spécifique, correspondant audit ensemble déterminé par lesdits moyens de détection (MD) et devant être appliqué à ladite trame reçue, ledit traitement protocolaire spécifique étant un traitement propre audit protocole Ethernet pour un premier ensemble de valeurs et un traitement propre à un protocole GMPLS ou L2-LSP pour un second ensemble de valeurs.

2. Dispositif selon la revendication 1, **caractérisé en ce que** lesdits moyens de traitement (MT) sont agencés pour ordonner l'application à ladite trame reçue du traitement protocolaire spécifique correspondant à l'ensemble déterminé.

3. Dispositif selon l'une des revendications 1 et 2, **caractérisé en ce que** lesdits moyens de traitement (MT) sont agencés pour accéder à une première table de correspondance entre des identifiants d'ensembles de valeurs et des traitements protocolaires de manière à déterminer un traitement protocolaire correspondant à un ensemble de valeurs déterminé par lesdits moyens de détection (MD).

4. Dispositif selon l'une des revendications 1 à 3, **caractérisé en ce que** lesdits moyens de traitement (MT) sont agencés pour accéder à une seconde table de correspondance entre des traitements protocolaires et des valeurs protocolaires dédiées de manière à ordonner le remplacement dans la trame reçue de la valeur de son champ de trame choisi par une valeur protocolaire dédiée audit traitement spécifique déterminé.

5. Dispositif selon l'une des revendications 1 à 4, **caractérisé en ce qu**'il comprend une première mémoire (M1), accessible auxdits moyens de détection (MD), et dans laquelle sont stockés lesdits ensembles de valeurs.

6. Dispositif selon l'une des revendications 3 et 4, **caractérisé en ce qu'**il comprend une seconde mémoire (M2), accessible auxdits moyens de traitement (MT), et dans laquelle sont stockées ladite première table de correspondance et/ou ladite seconde table de correspondance.

7. Dispositif selon l'une des revendications 1 à 6, **caractérisé en ce que** lesdits moyens de détection (MD) sont agencés pour modifier les valeurs définissant l'un au moins desdits ensembles en fonction d'instructions reçues.

8. Dispositif selon la revendication 7, **caractérisé en ce que** lesdites instructions proviennent d'un plan de contrôle (PC) dudit réseau.

9. Dispositif selon la revendication 8, **caractérisé en ce que** lesdits moyens de traitement (MT) constituent une partie au moins dudit plan de contrôle (PC).

10. Dispositif selon l'une des revendications 1 à 9, **caractérisé en ce que** ledit traitement propre au protocole Ethernet correspond au traitement natif du champ d'identifiant de VLAN chargé de définir des sous-réseaux virtuels au sein d'un même domaine Ethernet.

11. Dispositif selon l'une des revendications 1 à 10, **caractérisé en ce que** ledit traitement propre au protocole GMPLS ou L2-LSP est un traitement dans lequel la sémantique du champ d'identifiant de VLAN est celle d'un label GMPLS.

12. Dispositif selon l'une des revendications 1 à 11, **caractérisé en ce que** ledit traitement propre au protocole GMPLS ou L2-LSP comporte un service de routage du protocole GMPLS.

13. Dispositif selon l'une des revendications 1 à 12, **caractérisé en ce que** ledit traitement propre au protocole GMPLS ou L2-LSP comporte un service de signalisation du protocole GMPLS.

14. Dispositif selon l'une des revendications 1 à 13, **caractérisé en ce que** lesdits moyens de traitement (MT) sont agencés pour ordonner le remplacement de la valeur du champ Ethernet VLAN Tag par la valeur d'un champ dit « GMPLS label ».

15. Equipement de réseau (R) pour un réseau de communications supportant au moins un protocole de communication, **caractérisé en ce qu**'il comprend une partie au moins d'un dispositif de traitement de trames (D) selon l'une des revendications précédentes.

16. Procédé de gestion de trames de données pour un réseau de communications supportant au moins un protocole de communication Ethernet utilisant un format de trame de données comportant un champ d'identifiant de réseau local virtuel VLAN, **caractérisé en ce qu**'il consiste i) à identifier ledit champ d'identifiant de VLAN, ii) à associer audit champ d'identifiant de VLAN des ensembles de valeurs correspondant respectivement à des traitements protocolaires différents, et iii) à réception d'une trame de données, à déterminer l'ensemble auquel appartient la valeur contenue dans au moins son champ d'identifiant de VLAN, de manière à déterminer le traitement protocolaire spécifique, correspondant à l'ensemble déterminé, devant être appliqué à ladite trame reçue, ledit traitement protocolaire spécifique étant un traitement propre audit protocole Ethernet pour un premier ensemble de valeurs et un traitement propre à un protocole GMPLS ou L2-LSP pour un second ensemble de valeurs.

17. Procédé selon la revendication 16, **caractérisé en ce que** ledit traitement propre au protocole Ethernet correspond au traitement natif du champ d'identifiant de VLAN chargé de définir des sous-réseaux virtuels au sein d'un même domaine Ethernet.

18. Procédé selon la revendication 16 ou 17, **caractérisé en ce que** ledit traitement propre au protocole GMPLS ou L2-LSP est un traitement dans lequel la sémantique du champ d'identifiant de VLAN est celle d'un label GMPLS.

19. Procédé selon l'une des revendications 16 à 18, **caractérisé en ce que** ledit traitement propre au protocole GMPLS ou L2-LSP comporte un service de routage du protocole GMPLS.

20. Procédé selon l'une des revendications 16 à 19, **caractérisé en ce que** ledit traitement propre au protocole GMPLS ou L2-LSP comporte un service de signalisation du protocole GMPLS.

## Claims

1. A data frame processing system (D) for a communications network that supports at least one Ethernet communications protocol using a data frame format including a virtual local area network (VLAN) identifier field, which system is **characterized in that** it comprises detection means (MD) adapted, on receipt of a data frame, to determine, from a plurality of sets of predefined values corresponding to respective different forms of protocol processing, the set containing a value taken by said at least one VLAN identifier field of the received data frame, and processing means (MT) adapted to determine a specific form of protocol processing corresponding to said set determined by said detection means (MD) and to be applied to said received frame, said specific form of protocol processing being processing specific to said Ethernet protocol for a first set of values, and processing specific to a GMPLS or L2-LSP protocol for a second set of values.

2. A system according to claim 1, **characterized in that** said processing means (MT) are adapted to instruct the application to said received frame of the specific form of protocol processing corresponding to the determined set.

3. A system according to claim 1 or claim 2, **characterized in that** said processing means (MT) are adapted to access a first table of correspondences between set of value identifiers and forms of protocol processing in order to determine a form of protocol processing corresponding to a set of values determined by said detection means (MD).

4. A system according to any one of claims 1 to 3, **characterized in that** said processing means (MT) are adapted to access a second table of correspondences between forms of protocol processing and specific protocol values to instruct the substitution of a protocol value dedicated to said determined specific form of processing for the value of the selected frame field in the received frame.

5. A system according to any one of claims 1 to 4, **characterized in that** it comprises a first memory (M1) accessible to said detection means (MD) in which said sets of values are stored.

6. A system according to claim 3 or claim 4, **characterized in that** it comprises a second memory (M2) accessible to said processing means (MT) in which said first and/or second correspondence tables are stored.

7. A system according to any one of claims 1 to 6, **characterized in that** said detection means (MD) are adapted to modify the values defining at least one of said sets as a function of instructions received.

8. A system according to claim 7, **characterized in that** said instructions come from a control plane (PC) of said network.

9. A system according to claim 8, **characterized in that** said processing means (MT) constitute at least a portion of said control plane (PC).

10. A system according to any one of claims 1 to 9, **characterized in that** said processing specific to the Ethernet protocol corresponds to the native processing of the VLAN identifier field serving to define virtual sub-networks within the same Ethernet domain.

11. A system according to any one of claims 1 to 10, **characterized in that** said processing specific to the GMPLS or L2-LSP protocol is processing in which the semantics of the VLAN identifier field is the semantics of a GMPLS label.

12. A system according to any one of claims 1 to 11, **characterized in that** said processing specific to the GMPLS or L2-LSP protocol includes a routing service of the GMPLS protocol.

13. A system according to any one of claims 1 to 12, **characterized in that** said processing specific to the GMPLS or L2-LSP protocol includes a signaling service of the GMPLS protocol.

14. A system according to any one of claims 1 to 13, **characterized in that** said processing means (MT) are adapted to instruct substitution of the value of a GMPLS label field for the value of the "Ethernet VLAN Tag" field.

15. Network equipment (R) for a communications network that supports at least one communications protocols, which equipment is **characterized in that** it comprises at least a portion of a frame processing system (D) according to any one of the preceding claims.

16. A data frame processing method for a communications network that supports at least one Ethernet communications protocol using a data frame format including a virtual local area network (VLAN) identifier field, which method is **characterized in that** it consists in: i) identifying said VLAN identifier field; ii) associating with said VLAN identifier field sets of values corresponding respectively to different forms of protocol processing; and iii) on receipt of a data frame, determining the set containing a value that is contained in at least its VLAN identifier field, in order to determine the specific form of protocol processing corresponding to the set determined in this way and to be applied to the received frame, said specific form of protocol processing being processing specific to said Ethernet protocol for a first set of values, and processing specific to a GMPLS or L2-LSP protocol for a second set of values.

17. A method according to claim 16, **characterized in that** said processing specific to the Ethernet protocol corresponds to the native processing of the VLAN identifier field serving to define virtual sub-networks within the same Ethernet domain.

18. A method according to claim 16 or claim 17, **characterized in that** said processing specific to the GMPLS or L2-LSP protocol is processing in which the semantics of the VLAN identifier field is the semantics of a GMPLS label.

19. A method according to any one of claims 16 to 18, **characterized in that** said processing specific to the GMPLS or L2-LSP protocol includes a routing service of the GMPLS protocol.

20. A method according to any one of claims 16 to 19, **characterized in that** said processing specific to the GMPLS or L2-LSP protocol includes a signaling service of the GMPLS protocol.

## Patentansprüche

1. Vorrichtung zur Bearbeitung von Datenrahmen (D) für ein Kommunikationsnetzwerk, das mindestens ein Ethernet-Kommunikationsprotokoll unterstützt, welches ein Datenrahmenformat unterstützt, das ein Kennungsfeld des virtuellen lokalen Netzwerks VLAN umfasst, **dadurch gekennzeichnet, dass** sie Erkennungsmittel (MD) umfasst, die so gestaltet sind, dass sie beim Empfang eines Datenrahmens aus vordefinierten Wertemengen, die jeweils unterschiedlichen Protokollbearbeitungen entsprechen, diejenige Menge bestimmt, zu der ein Wert gehört, welcher mindestens von dem VLAN-Kennungsfeld angenommen wird, das in dem empfangenen Rahmen enthalten ist, sowie Bearbeitungsmittel, die so gestaltet sind, dass sie eine spezifische Protokollbearbeitung bestimmen, die der von den Erkennungsmitteln (MD) bestimmten Menge entspricht und die auf den empfangenen Rahmen angewendet werden muss, wobei es sich bei der spezifischen Protokollbearbeitung um eine für das Ethernet-Protokoll charakteristische Bearbeitung für eine erste Wertemenge und um eine für ein GMPLS- oder L2-LSP-Protokoll charakteristische Bearbeitung für eine zweite Wertemenge handelt.

2. Vorrichtung nach Anspruch 1, **dadurch gekennzeichnet, dass** die Bearbeitungsmittel (MT) so gestaltet sind, dass sie die Anwendung derjenigen spezifischen Protokollbearbeitung auf den empfangenen Rahmen anordnen, die der bestimmen [Werte-] Menge entspricht.

3. Vorrichtung nach einem der Ansprüche 1 und 2, **dadurch gekennzeichnet, dass** die Bearbeitungsmittel (MT) so gestaltet sind, dass sie auf eine erste Entsprechungstabelle zwischen den Kennungen von Wertemengen und Protokollbearbeitung in einer Weise zugreifen, dass sie eine Protokollbearbeitung bestimmen, die einer von den Erkennungsmitteln (MD) bestimmten Wertemenge entspricht.

4. Vorrichtung nach einem der Ansprüche 1 bis 3, **dadurch gekennzeichnet, dass** die Bearbeitungsmittel (MT) so gestaltet sind, dass sie auf eine zweite Entsprechungstabelle zwischen Protokollbearbeitungen und ausschließlich zugeordneten Protokollwerten in einer Weise zugreifen, dass sie in dem empfangenen Rahmen die Ersetzung des Wertes seines gewählten Rahmenfeldes durch einen ausschließlich für die bestimmte Bearbeitung zugeordneten Protokollwert anordnen.

5. Vorrichtung nach einem der Ansprüche 1 bis 4, **dadurch gekennzeichnet, dass** sie einen ersten Speicher (M1) umfasst, der für ihre Erkennungsmittel (MD) zugänglich ist und in dem die verschiedenen Wertemengen gespeichert werden.

6. Vorrichtung nach einem der Ansprüche 3 und 4, **dadurch gekennzeichnet, dass** sie einen zweiten Speicher (M2) umfasst, der für ihre Bearbeitungsmittel (MT) zugänglich ist und in dem die erste Entsprechungstabelle und/oder die zweite Entsprechungstabelle gespeichert werden.

7. Vorrichtung nach einem der Ansprüche 1 bis 6, **dadurch gekennzeichnet, dass** die Erkennungsmittel (MD) so gestaltet sind, dass sie die Werte ändern, die mindestens die eine der Mengen in Abhängigkeit von empfangenen Anweisungen definieren.

8. Vorrichtung nach Anspruch 7, **dadurch gekennzeichnet, dass** die Anweisungen von der Steuerungsebene (PC) des Netzwerks kommen.

9. Vorrichtung nach Anspruch 8, **dadurch gekennzeichnet, dass** die Bearbeitungsmittel (MT) mindestens einen Teil der Steuerungsebene (PC) bilden.

10. Vorrichtung nach einem der Ansprüche 1 bis 9, **dadurch gekennzeichnet, dass** die für das Ethernet-Protokoll charakteristische Bearbeitung der ursprünglichen eigenen Bearbeitung des VLAN-Kennungsfelds entspricht, welches die Aufgabe hat, virtuelle Teilnetzwerke innerhalb derselben Ethernet-Domain zu definieren.

11. Vorrichtung nach einem der Ansprüche 1 bis 10, **dadurch gekennzeichnet, dass** die für das GMPLS- oder L2-LSP-Protokoll charakteristische Bearbeitung eine Bearbeitung ist, bei der die Semantik des VLAN-Kennungsfelds diejenige eines GMPLS-Labels ist.

12. Vorrichtung nach einem der Ansprüche 1 bis 11, **dadurch gekennzeichnet, dass** die für das GMPLS- oder L2-LSP-Protokoll charakteristische Bearbeitung einen Leitweglenkungsdienst des GMPLS-Protokolls umfasst.

13. Vorrichtung nach einem der Ansprüche 1 bis 12, **dadurch gekennzeichnet, dass** die für das GMPLS- oder L2-LSP-Protokoll charakteristische Bearbeitung einen Signalisierungsdienst des GMPLS-Protokolls umfasst.

14. Vorrichtung nach einem der Ansprüche 1 bis 13, **dadurch gekennzeichnet, dass** die Bearbeitungsmittel (MT) so gestaltet sind, dass sie die Ersetzung des Wertes des Feldes "Ethernet VLAN Tag" durch den Wert eines als "GMPLS Label" bezeichneten Feldes anordnen.

15. Netzwerkeinrichtung (R) für ein Kommunikationsnetzwerk, welches mindestens ein Kommunikationsprotokoll unterstützt, **dadurch gekennzeichnet, dass** sie mindestens einen Teil einer Vorrichtung zur Bearbeitung von Rahmen (D) nach einem der vorhergehenden Ansprüche umfasst.

16. Verfahren zur Verwaltung von Datenrahmen für ein Kommunikationsnetzwerk, welches mindestens ein Ethernet-Kommunikationsprotokoll unterstützt, das ein Datenrahmenformat verwendet, das ein Kennungsfeld des virtuellen lokalen Netzwerks VLAN umfasst, **dadurch gekennzeichnet, dass** es darin besteht, i) das VLAN-Kennungsfeld zu identifizieren; ii) dem VLAN-Kennungsfeld Wertemengen zuzuordnen, die jeweils unterschiedlichen Protokollbearbeitungen entsprechen; und iii) beim Empfang eines Datenrahmens die Menge zu bestimmen, zu welcher der mindestens in einen VLAN-Kennungsfeld enthaltene Wert gehört, so dass die spezifische Protokollbearbeitung bestimmt wird, die der bestimmten Menge entspricht und die auf den empfangenen Datenrahmen angewendet werden muss, wobei die es sich bei der spezifischen Protokollbearbeitung um eine für das Ethernet-Protokoll charakteristische Bearbeitung für eine erste Wertemenge handelt und um eine für ein GMPLS- oder L2-LSP-Protokoll charakteristische Bearbeitung für eine zweite Wertemenge.

17. Verfahren nach Anspruch 16, **dadurch gekennzeichnet, dass** die für das Ethernet-Protokoll charakteristische Bearbeitung der eigenen ursprünglichen Bearbeitung des VLAN-Kennungsfelds entspricht, welche die Aufgabe hat, virtuelle Teilnetzwerke innerhalb derselben Ethernet-Domain zu definieren.

18. Verfahren nach Anspruch 16 oder 17, **dadurch gekennzeichnet, dass** die für das GMPLS- oder L2-LSP-Protokoll charakteristische Bearbeitung eine Bearbeitung ist, bei der die Semantik des VLAN-Kennungsfelds diejenige eines GMPLS-Labels ist.

19. Verfahren nach einem der Ansprüche 16 bis 18, **dadurch gekennzeichnet, dass** die für das GMPLS- oder L2-LSP-Protokoll charakteristische Bearbeitung einen Leitweglenkungsdienst des GMPLS-Protokolls umfasst.

20. Verfahren nach einem der Ansprüche 16 bis 19, **dadurch gekennzeichnet, dass** die für das GMPLS- oder L2-LSP-Protokoll charakteristische Bearbeitung einen Signalisierungsdienst des GMPLS-Protokolls umfasst.
